# EUROPEAN PATENT APPLICATION

(11) **EP 4 640 533 A1**
(43) Date of publication of application: **29.10.2025**
(21) Application number: 25169942.7
(22) Date of filing: 11.04.2025
(51) Int. Cl.: B62D 25/20, B60N 2/00, B60K 1/04

(54) **VEHICLE LOWER STRUCTURE**

(30) Priority: 24.04.2024 JP 2024070767
(71) Applicant: TOYOTA JIDOSHA KABUSHIKI KAISHA, Toyota-shi, Aichi-ken, 471-8571 (JP)
(72) Inventor: SAEKI, Koji, TOYOTA-SHI, AICHI-KEN, 471-8571 (JP); HASHIDA, Shigenori, TOYOTA-SHI, AICHI-KEN, 471-8571 (JP); TOYOSHIMA, Hiroki, TOYOTA-SHI, AICHI-KEN, 471-8571 (JP)
(74) Representative: Cabinet Beau de Loménie

(57) **Abstract**

A vehicle lower structure includes: a battery case (12) that is provided at a lower part of a vehicle and houses a battery, and of which an upper face constitutes a vehicle cabin floor; a cover (32) that covers a protection target provided on a vehicle upper side of the battery case (12) and supports a seat cushion (35) of a vehicle seat (VS) from a vehicle lower side; and a reinforcing cross-member (40) that is provided on a vehicle front side of the cover (32) and extends in a vehicle width direction, and in which a support part (40A) that supports the cover (32) from the lower side is provided at an upper end portion.

## Description

### BACKGROUND OF THE INVENTION

### 1. Field of the Invention

The present invention relates to a vehicle lower structure.

### 2. Description of Related Art

Japanese Unexamined Patent Application Publication No. 2023-142763 (JP 2023-142763 A) discloses a vehicle having a battery installed on a vehicle lower side of a floor panel. In the vehicle disclosed in JP 2023-142763 A, a battery module is housed inside a battery case. At a rear part of the battery case, a raised part that houses a large-sized battery module is formed, and the raised part of the battery case is located under a seat cushion of a rear seat.

### SUMMARY OF THE INVENTION

In recent years, a structure has been known in which a floor panel has been removed and an upper face of a battery case is made to function as a floor panel to reduce the number of components and expand space inside a vehicle cabin. In such a structure, when an excessive load is input from an occupant on a rear seat into a seat cushion in the event of a frontal-impact collision of the vehicle, as the load is not distributed by a floor panel or a cross-member, the load may be input into housed objects, including a battery module, that are located under the seat cushion.

The present disclosure provides a vehicle lower structure that is a structure in which an upper face of a battery case is made to function as a floor panel and which can inhibit input of a load into objects housed under a vehicle seat in the event of a frontal-impact collision of the vehicle.

A vehicle lower structure according to an aspect of the present disclosure has: a battery case that is provided at a lower part of a vehicle and houses a battery, and of which an upper face constitutes a vehicle cabin floor; a cover that covers a protection target provided on a vehicle upper side of the battery case and supports a seat cushion of a vehicle seat from a vehicle lower side; and a front-side reinforcing cross-member that is provided on a vehicle front side of the cover and extends in a vehicle width direction, and in which a support part that supports the cover from the lower side is provided at an upper end portion.

According to the configuration described above, the battery case that houses the battery is provided at a lower part of the vehicle, and the upper face of the battery case constitutes the vehicle cabin floor. Thus, the need for a floor panel is eliminated, and space inside the vehicle cabin can be expanded compared with a configuration in which a floor panel is provided.

The cover is provided on the vehicle upper side of the battery case. The cover covers the protection target from an outer side and supports the seat cushion of the vehicle seat from the vehicle lower side. Here, the front-side reinforcing cross-member is provided on the vehicle front side of the cover. The front-side reinforcing cross-member extends in the vehicle width direction, and the support part that supports the cover from the lower side is provided at the upper end portion of the front-side reinforcing cross-member. Thus, in the event of a frontal-impact collision of the vehicle, even when an excessive load is input from an occupant seated on the vehicle seat into the cover, the collision load is transmitted in the vehicle width direction through the front-side reinforcing cross-member, so that input of the collision load into the protection target can be inhibited. In the following description, "in the event of a frontal-impact collision" may be referred to simply as "in the event of a frontal collision." "The support part that supports the cover from the lower side" here is a concept that is not limited to a component that directly supports the cover but broadly includes a component that indirectly supports the cover.

In the vehicle lower structure according to the aspect of the present disclosure, the cover may include an upper wall part that supports the seat cushion and a front wall part that extends from a front end of the upper wall part toward the vehicle lower side. The front-side reinforcing cross-member may be disposed at a position overlapping the front wall part as seen in a plan view.

According to the configuration described above, the cover is configured to include the upper wall part, the front wall part, and the rear wall part, and the seat cushion is supported by the upper wall part. Since the front-side reinforcing cross-member is disposed at a position overlapping the front wall part as seen in a plan view, a load can be effectively transmitted from the front wall part to the front-side reinforcing cross-member.

In the vehicle lower structure according to the aspect of the present disclosure, the upper wall part of the cover may be inclined toward the vehicle lower side in a direction from the vehicle front side toward a vehicle rear side as seen in a vehicle side view.

According to the configuration described above, since the cover is inclined toward the vehicle lower side in the direction from the vehicle front side toward the vehicle rear side as seen in a vehicle side view, in the event of a frontal collision, a load is input from the buttocks of an occupant into the cover toward the front side as well as the lower side, and thus the load can be efficiently transmitted to the front-side reinforcing cross-member. In addition, a reaction force toward the vehicle rear side as well as the vehicle upper side acts on the buttocks of the occupant from the cover, which can inhibit inertial movement of the occupant toward the vehicle front side.

In the vehicle lower structure according to the aspect of the present disclosure, both end portions in the vehicle width direction of the front-side reinforcing cross-member may be connected to a pair of left and right side members that extends in a vehicle front-rear direction.

According to the configuration described above, a load input into the front-side reinforcing cross-member through the cover is transmitted to the pair of left and right side members. Thus, input of the load into the battery case can be inhibited. "Both end portions in the vehicle width direction" here is a concept showing predetermined ranges including both ends in the vehicle width direction.

In the vehicle lower structure according to the aspect of the present disclosure, the pair of the left and right side members may each include a main body part that extends in the vehicle front-rear direction, and a front-side protruding part that is protruded from the main body part toward an inner side in the vehicle width direction and to which the front-side reinforcing cross-member is connected.

According to the configuration described above, the side members are each configured to include the main body part and the front-side protruding part. Thus, compared with a configuration in which the front-side reinforcing cross-member is fixed by being placed against the side member, stress concentration at a junction between the front-side reinforcing cross-member and the side member can be inhibited, so that a load can be effectively transmitted from the front-side reinforcing cross-member to the side member.

In the vehicle lower structure according to the aspect of the present disclosure, the front-side protruding part may have an inverted U-shape that is open on the vehicle lower side as seen in a vehicle side view so as to cover an upper face, a front face, and a rear face of the front-side reinforcing cross-member.

According to the configuration described above, the front-side protruding part has an inverted U-shape that is open on the vehicle lower side as seen in a vehicle side view. Thus, three faces, the upper face, the front face, and the rear face, of the front-side reinforcing cross-member are covered by the front-side protruding part. As a result, the front-side reinforcing cross-member can be fastened to the front-side protruding part at any one of the upper face, the front face, and the rear face, which improves the ease of assembly.

The vehicle lower structure according to the aspect of the present disclosure may have a rear-side reinforcing cross-member that is provided on a vehicle rear side of the cover and extends in the vehicle width direction, and in which a support part that supports the cover from the lower side is provided at an upper end portion.

According to the configuration described above, the rear-side reinforcing cross-member is provided on the vehicle rear side of the cover, and the rear-side reinforcing cross-member extends in the vehicle width direction. Thus, a load acting on the front side of the cover can be borne by the front-side reinforcing cross-member, and a load acting on the rear side of the cover can be borne by the rear-side reinforcing cross-member. As a result, breaking of a rear part of the cover can be inhibited even when an excessive load acts thereon.

In the vehicle lower structure according to the aspect of the present disclosure, the pair of the left and right side members may each include a rear-side protruding part that is protruded from the main body part toward the inner side in the vehicle width direction and to which the rear-side reinforcing cross-member is connected. The rear-side reinforcing cross-member may be connected to the side member at the rear-side protruding part.

According to the configuration described above, the side members are each configured to include the main body part and the rear-side protruding part. Thus, compared with a configuration in which the rear-side reinforcing cross-member is fixed by being placed against the side member, stress concentration at a junction between the rear-side reinforcing cross-member and the side member can be inhibited, so that a load can be effectively transmitted from the rear-side reinforcing cross-member to the side member.

In the vehicle lower structure according to the aspect of the present disclosure, the rear-side protruding part may have an inverted U-shape that is open on the vehicle lower side as seen in a vehicle side view so as to cover an upper face, a front face, and a rear face of the rear-side reinforcing cross-member.

According to the configuration described above, the rear-side protruding part has an inverted U-shape that is open on the vehicle lower side as seen in a vehicle side view. Thus, three faces, the upper face, the front face, and the rear face, of the rear-side reinforcing cross-member are covered by the rear-side protruding part. As a result, the rear-side reinforcing cross-member can be fastened to the rear-side protruding part at any one of the upper face, the front face, and the rear face, which improves the ease of assembly.

The vehicle lower structure according to the aspect of the present disclosure may include a pair of left and right rockers that extends in the vehicle front-rear direction on both sides in the vehicle width direction. Front portions of the side members may be fixed on the rockers.

According to the configuration described above, since the front portion of each side member is fixed on the rocker, in the event of a frontal-impact collision, a load input into the side member through the front-side reinforcing cross-member is transmitted toward the vehicle front side through the rocker. Thus, the collision load can be more effectively distributed.

In the vehicle lower structure according to the aspect of the present disclosure, the pair of the left and right side members may be integrally provided by casting.

According to the configuration described above, the pair of left and right side members is integrally provided by casting. Thus, a load input into the left or right side member can be borne by the high-strength member that is integrally provided.

In the vehicle lower structure according to the aspect of the present disclosure, the cover may be provided as a separate body from the battery case and cover auxiliaries that are the protection targets.

According to the configuration described above, since the cover is provided as a separate body from the battery case, the cover can be assembled as a vehicle seat-side module. In addition, maintenance of auxiliaries can be performed by simply removing the cover.

In the vehicle lower structure according to the aspect of the present disclosure, the front-side reinforcing cross-member may have a closed cross-sectional shape and include a partition part that divides an internal space into upper and lower parts. The partition part may be located at the same level as upper faces of the rockers.

According to the configuration described above, the rigidity can be enhanced by the partition part. By setting the partition part at the same level as the upper faces of the rockers, in the event of a collision, such as a side-impact collision, of the vehicle, a load can be effectively transmitted from the rocker to the front-side reinforcing cross-member. As a result, the collision load can be smoothly transmitted toward an opposite-collision side.

As has been described above, the vehicle lower structure according to the present disclosure is a structure in which the upper face of the battery case is made to function as the floor panel, and which can inhibit input of a load into objects housed under the vehicle seat in the event of a frontal-impact collision of the vehicle.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a perspective view showing main parts of a vehicle to which a vehicle lower structure according to a first embodiment is applied;
FIG. 2 is a schematic sectional side view of the vehicle lower structure according to the first embodiment;
FIG. 3 is a schematic sectional plan view of the vehicle lower structure according to the first embodiment;
FIG. 4 is an exploded perspective view showing main parts of the vehicle lower structure according to the first embodiment;
FIG. 5 is a perspective view showing main parts of the vehicle lower structure according to the first embodiment;
FIG. 6 is an enlarged perspective view showing, in close-up, main parts of the vehicle lower structure according to the first embodiment;
FIG. 7 is a sectional view showing a state as cut along line 7-7 in FIG. 3;
FIG. 8 is a schematic sectional side view of a vehicle lower structure according to a second embodiment;
FIG. 9 is a schematic sectional side view of a vehicle lower structure according to a third embodiment;
FIG. 10 is a perspective view showing main parts of the vehicle lower structure according to the third embodiment; and
FIG. 11 is a schematic sectional side view of a vehicle lower structure according to a fourth embodiment.

### DETAILED DESCRIPTION OF EMBODIMENTS

### First Embodiment

A vehicle lower structure according to a first embodiment will be described with reference to the drawings.

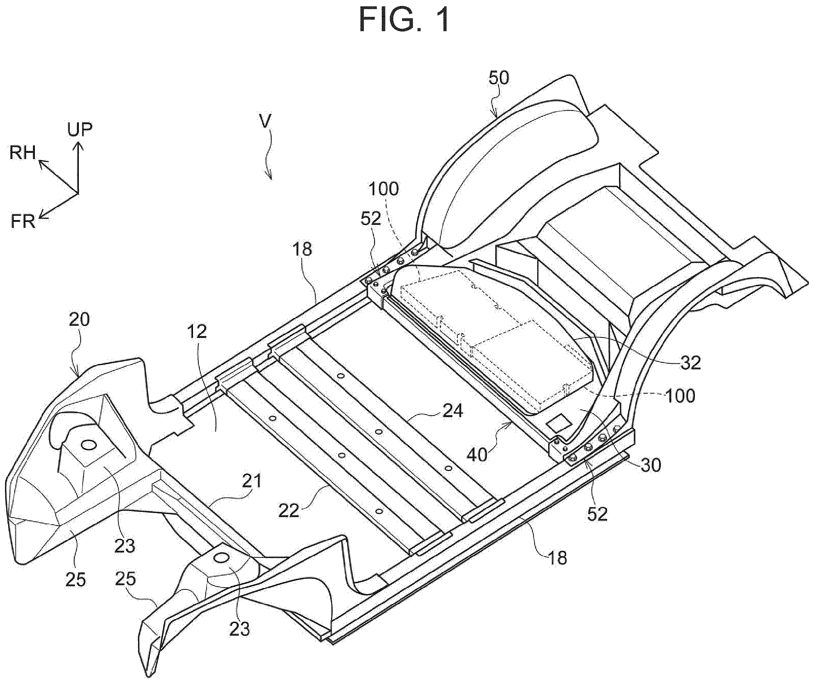

FIG. 1 is a perspective view showing main parts of a vehicle V to which the vehicle lower structure according to the first embodiment is applied. The arrows FR, UP, and RH in the drawings indicate a vehicle frontward direction, a vehicle upward direction, and a vehicle rightward direction, respectively, in the vehicle. Unless otherwise noted, when the directions of front and rear, up and down, and left and right are used in the following description, these directions indicate front and rear in a vehicle front-rear direction, up and down in a vehicle-height direction, and left and right in a vehicle left-right direction (width direction), respectively.

As shown in FIG. 1, a battery case 12 is provided at a center part in the front-rear direction of the vehicle V. The battery case 12 is provided at a lower part of the vehicle. An upper face of the battery case 12 constitutes a vehicle cabin floor, and therefore the vehicle V of the present embodiment is not provided with a floor panel.

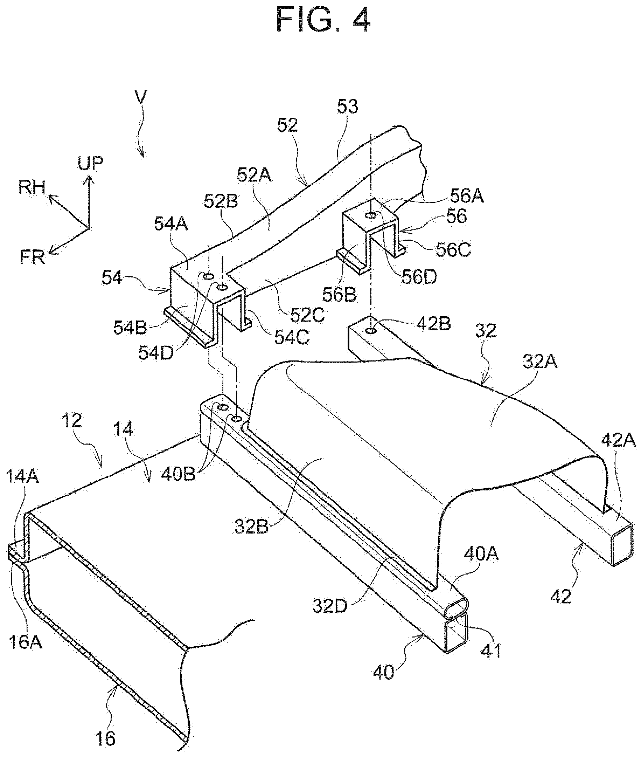

As shown in FIG. 4, the battery case 12 is formed in a substantially box shape including an upper case 14 and a lower case 16, and a battery (battery pack; not shown) is installed inside the battery case 12. The battery case may be formed by a battery cover that covers the upper side of the battery. In this case, instead of the lower case 16, a member that supports the battery from the lower side may be provided.

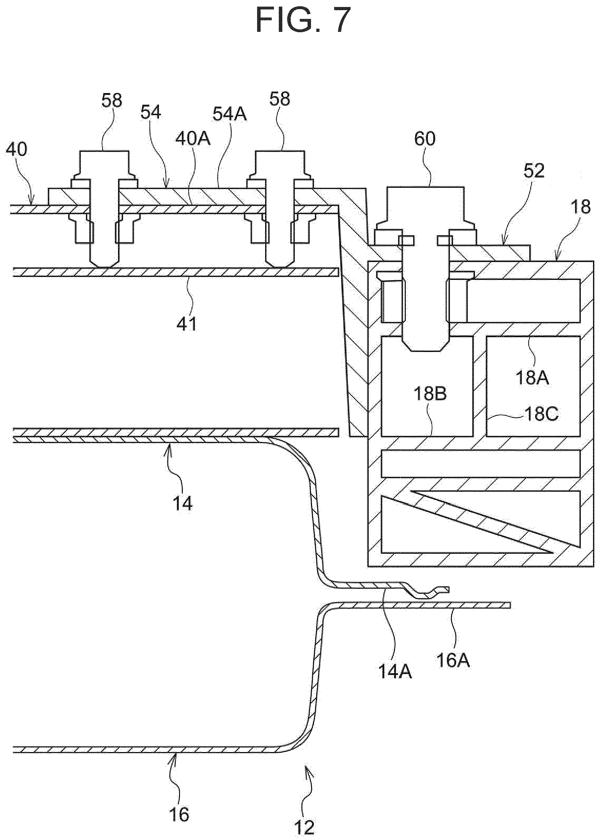

As shown in FIG. 1, on both sides in the vehicle width direction of the battery case 12, a pair of left and right rockers 18 that extends in the vehicle front-rear direction is provided, and the battery case 12 is mounted on the rockers 18. As shown in FIG. 7, the rockers 18 are framework members having a substantially rectangular closed cross-section, and inside each rocker 18, an upper partition wall 18A and a lower partition wall 18B that extend in the vehicle width direction and divide an internal space of the rocker 18 into upper and lower parts are provided.

In the rocker 18, a vertical rib 18C is formed that links the upper partition wall 18A and the lower partition wall 18B to each other in the height direction. Further, a rib is formed also in a space under the lower partition wall 18B. However, the cross-sectional shape of the rocker 18 is not limited to this shape and may be changed as appropriate. For example, a rocker that does not include the upper partition wall 18A, the lower partition wall 18B, and the vertical rib 18C may be adopted.

An upper-side flange 14A is extended from each end portion in the vehicle width direction of the upper case 14 constituting a part of the battery case 12 toward the outer side in the vehicle width direction, and a lower-side flange 16A is extended from each end portion in the vehicle width direction of the lower case 16 toward the outer side in the vehicle width direction. The upper-side flange 14A and the lower-side flange 16A are located under the rocker 18 and joined together in a layered state. The upper-side flange 14A and the lower-side flange 16A are fastened to the rocker 18 with a fastening tool, such as a bolt, inserted from below.

As shown in FIG. 1, front end portions of the rockers 18 are connected to a front module 20. The front module 20 is integrally provided by casting, for example, and is configured to include a dash panel part 21, suspension tower parts 23, front side member parts 25, and the like.

The dash panel part 21 extends in the vehicle width direction and the vehicle-height direction and separates a space inside the vehicle cabin and a space outside the vehicle cabin. The front side member parts 25 extend from both end portions in the vehicle width direction of the dash panel part 21 toward the vehicle front side and constitute a load path in the event of a frontal-impact collision. The suspension tower parts 23 are provided as a left-right pair and each configured to be able to support a suspension (not shown).

At center portions in the vehicle front-rear direction of the rockers 18, a first cross-member 22 and a second cross-member 24 are provided. The first cross-member 22 and the second cross-member 24 each extend in the vehicle width direction and are suspended between the pair of left and right rockers 18. On the first cross-member 22 and the second cross-member 24, a vehicle seat of a front seat (not shown) is mounted.

Next, a part on the vehicle rear side of the rockers 18 that is a main part of the present disclosure will be described.

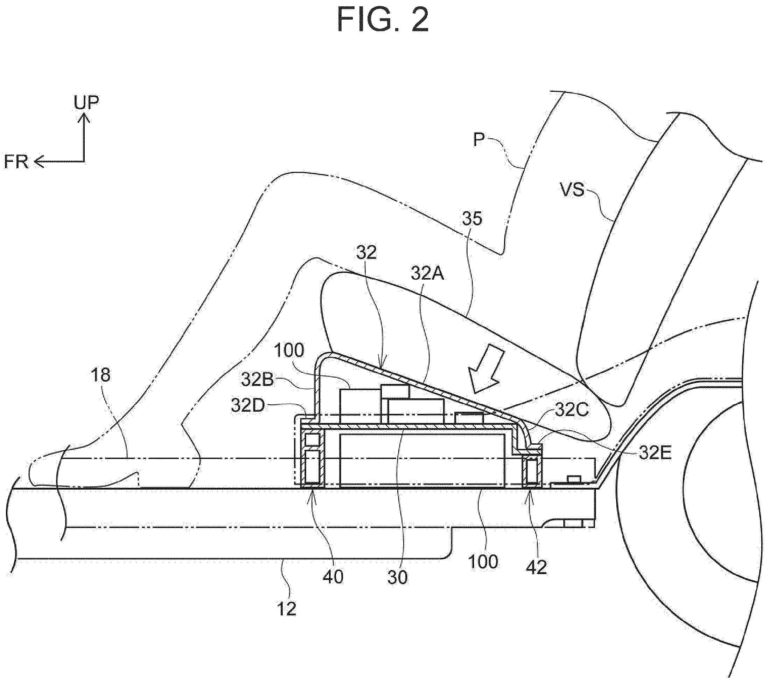

FIG. 2 is a schematic sectional side view of the vehicle lower structure according to the first embodiment. As shown in FIG. 2, on the vehicle upper side of the battery case 12, auxiliaries 100 as protection targets are provided. The auxiliaries 100 are configured to include a plurality of auxiliary devices, and include, for example, an inverter, a DC-DC converter, a charger, and an electronic control unit (ECU).

The auxiliaries 100 are divided and disposed in two upper and lower tiers. Specifically, in a space where the auxiliaries 100 are disposed, a substantially flat plate-shaped partition plate 30 extending in the vehicle width direction and the vehicle front-rear direction is provided, and some of the auxiliaries 100 are disposed under the partition plate 30 and the rest of the auxiliaries 100 are disposed on an upper face of the partition plate 30.

As shown in FIG. 1, the partition plate 30 extends from one end portion to the other end portion in the vehicle width direction, and is formed to be larger than an auxiliary cover 32 to be described later. While the material of the partition plate 30 is not particularly limited, a material with high heat conductivity, such as aluminum, is preferable from the viewpoint of improving the heat dissipation performance of the auxiliaries 100. In the partition plate 30, a plurality of openings is formed, through which a connector for connecting a wire harness from an outside to the auxiliaries 100 may be exposed.

Here, the auxiliaries 100 are covered by the auxiliary cover 32. As shown in FIG. 2, the auxiliary cover 32 is formed as a separate body from the battery case 12, and is provided on the vehicle upper side of the battery case 12 and supports a seat cushion 35 of a vehicle seat VS of a rear seat from the vehicle lower side. Another member may be interposed between the auxiliary cover 32 and the seat cushion 35.

The auxiliary cover 32 is configured to include an upper wall part 32A that supports the seat cushion 35, a front wall part 32B that extends from a front end of the upper wall part 32A toward the vehicle lower side, and a rear wall part 32C that extends from a rear end of the upper wall part 32A toward the vehicle lower side.

The upper wall part 32A is inclined toward the vehicle lower side in a direction from the vehicle front side toward the vehicle rear side as seen in a vehicle side view so as to correspond to an inclination of the seat cushion 35. The front wall part 32B extends substantially perpendicularly from the front end of the upper wall part 32A toward the vehicle lower side. A lower end portion of the front wall part 32B is a front flange 32D that is bent toward the vehicle front side along a front-side reinforcing cross-member 40, to be described later, and is fixed to the front-side reinforcing cross-member 40 through the partition plate 30. The method of fixing the auxiliary cover 32 is not particularly limited, and the auxiliary cover 32 may be mechanically fastened with bolts, rivets, or the like, or may be joined by welding or the like.

The rear wall part 32C extends substantially perpendicularly from the rear end of the upper wall part 32A toward the vehicle lower side. A lower end portion of the rear wall part 32C is a rear flange 32E that is bent toward the vehicle rear side along a rear-side reinforcing cross-member 42, to be described later, and is fixed on the rear-side reinforcing cross-member 42 through the partition plate 30. The front flange 32D and the rear flange 32E may be directly fastened to the front-side reinforcing cross-member 40 and the rear-side reinforcing cross-member 42, without the partition plate 30 interposed therebetween.

Under the front flange 32D of the auxiliary cover 32, the front-side reinforcing cross-member 40 is disposed. Under the rear flange 32E of the auxiliary cover 32, the rear-side reinforcing cross-member 42 is disposed, and both the front-side reinforcing cross-member 40 and the rear-side reinforcing cross-member 42 are framework members with a closed cross-sectional structure.

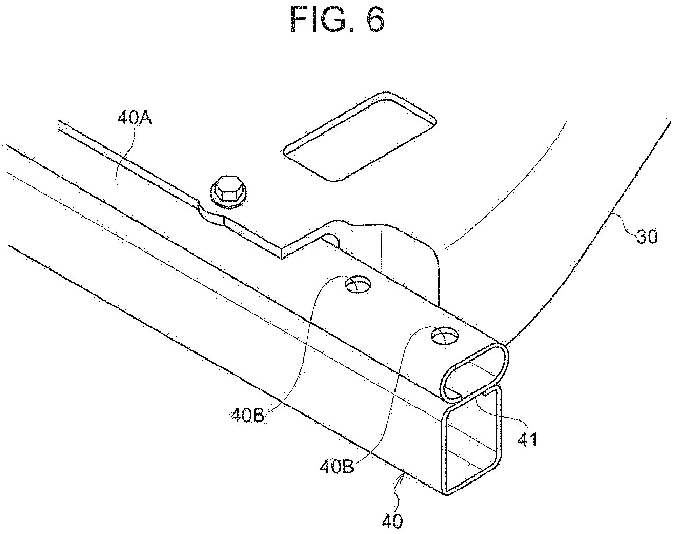

As shown in FIG. 4 and FIG. 6, the front-side reinforcing cross-member 40 is provided on the vehicle front side of the auxiliary cover 32 and extends farther toward the outer sides in the vehicle width direction than the auxiliary cover 32. The front-side reinforcing cross-member 40 has a cross-sectional shape including two upper and lower closed cross-sections that is formed by bending one rigid plate into a substantially S-shape, and an upper face 40A of the front-side reinforcing cross-member 40 constitutes a support part that supports the auxiliary cover 32 from the lower side.

The front-side reinforcing cross-member 40 includes, inside the cross-section, a partition part 41 that divides an internal space into upper and lower parts. As shown in FIG. 7, the partition part 41 is located at the same level as the upper face of the rocker 18. That is, an imaginary line extending the partition part 41 in the vehicle width direction coincides with the upper face of the rocker 18.

As shown in FIG. 4, the rear-side reinforcing cross-member 42 is provided on the vehicle rear side of the auxiliary cover 32, and like the front-side reinforcing cross-member 40, extends farther toward the outer sides in the vehicle width direction than the auxiliary cover 32. The rear-side reinforcing cross-member 42 has a smaller cross-sectional area than the front-side reinforcing cross-member 40, and has a cross-sectional shape including one closed cross-section that is formed by bending one rigid plate into a substantially rectangular shape. Further, an upper face 42A of the rear-side reinforcing cross-member 42 constitutes a support part that supports the auxiliary cover 32 from the lower side.

As shown in FIG. 2, the front-side reinforcing cross-member 40 is disposed at a position overlapping the front wall part 32B of the auxiliary cover 32 as seen in a plan view. Similarly, the rear-side reinforcing cross-member 42 is disposed at a position overlapping the rear wall part 32C of the auxiliary cover 32 as seen in a plan view.

As shown in FIG. 1, both end portions in the vehicle width direction of the front-side reinforcing cross-member 40 are connected to a pair of left and right side members 52 that extends in the vehicle front-rear direction. The pair of left and right side members 52 is integrally provided by casting. Specifically, the pair of left and right side members 52 constitutes a part of a rear module 50 that is integrally provided by casting.

As shown in FIG. 4, each side member 52 is configured to include a main body part 53 that extends in the vehicle front-rear direction, and a front-side protruding part 54 and a rear-side protruding part 56 that are protruded from the main body part 53.

The main body part 53 of the side member 52 includes an upper face 52A, an outer face 52B that extends downward from the outer side in the vehicle width direction of the upper face 52A, and an inner face 52C that extends downward from the inner side in the vehicle width direction of the upper face 52A.

The protruding part 54 is formed so as to protrude from a front end of the main body part 53 toward the inner side in the vehicle width direction, and has such a shape that the front-side reinforcing cross-member 40 can be connected thereto. Specifically, the front-side protruding part 54 is configured to include an upper face 54A located on the upper side, a front face 54B extending downward from a front end of the upper face 54A, and a rear face 54C extending downward from a rear end of the upper face 54A, and has an inverted U-shape that is open on the vehicle lower side as seen in a vehicle side view. The upper face, a front face, and a rear face of the front-side reinforcing cross-member 40 are covered by the upper face 54A, the front face 54B, and the rear face 54C of the front-side protruding part 54.

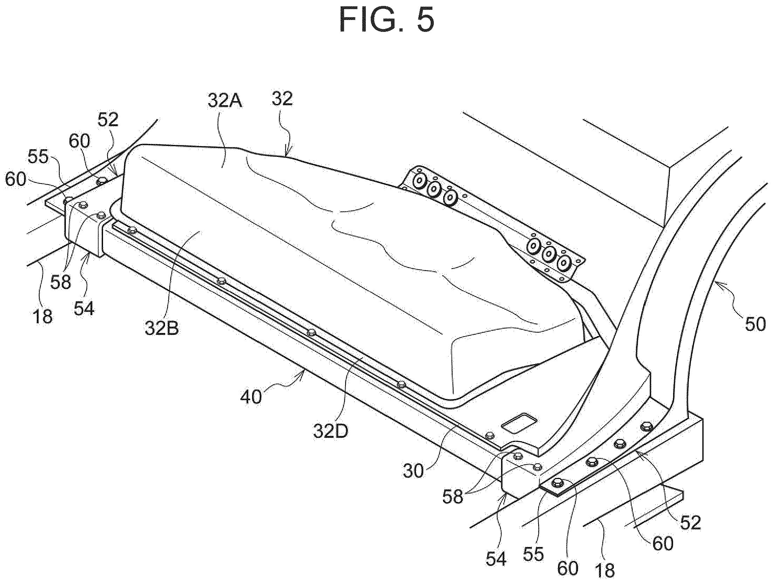

In the upper face 54A of the front-side protruding part 54, two bolt holes 54D are formed. In the upper face 40A of the front-side reinforcing cross-member 40, bolt holes 40B are formed at positions corresponding to the bolt holes 54D of the front-side protruding part 54, and the front-side reinforcing cross-member 40 is fastened to the front-side protruding part 54 (side member 52) with bolts 58 inserted through the bolt holes 54D and the bolt holes 40B (see FIG. 5).

The rear-side protruding part 56 is formed so as to protrude toward the inner side in the vehicle width direction from the rear side in the main body part 53 relative to the front-side protruding part 54, and has such a shape that the rear-side reinforcing cross-member 42 can be connected thereto. Specifically, the rear-side protruding part 56 is configured to include an upper face 56A located on the upper side, a front face 56B extending downward from a front end of the upper face 56A, and a rear face 56C extending downward from a rear end of the upper face 56A, and has an inverted U-shape that is open on the vehicle lower side as seen in a vehicle side view. The upper face, a front face, and a rear face of the rear-side reinforcing cross-member 42 are covered by the upper face 56A, the front face 56B, and the rear face 56C of the rear-side protruding part 56.

In the upper face 56A of the rear-side protruding part 56, a bolt hole 56D is formed. In the upper face 42A of the rear-side reinforcing cross-member 42, a bolt hole 42B is formed at a position corresponding to the bolt hole 56D of the rear-side protruding part 56, and the rear-side reinforcing cross-member 42 is fastened to the rear-side protruding part 56 (side member 52) with a bolt inserted through the bolt hole 56D and the bolt hole 42B.

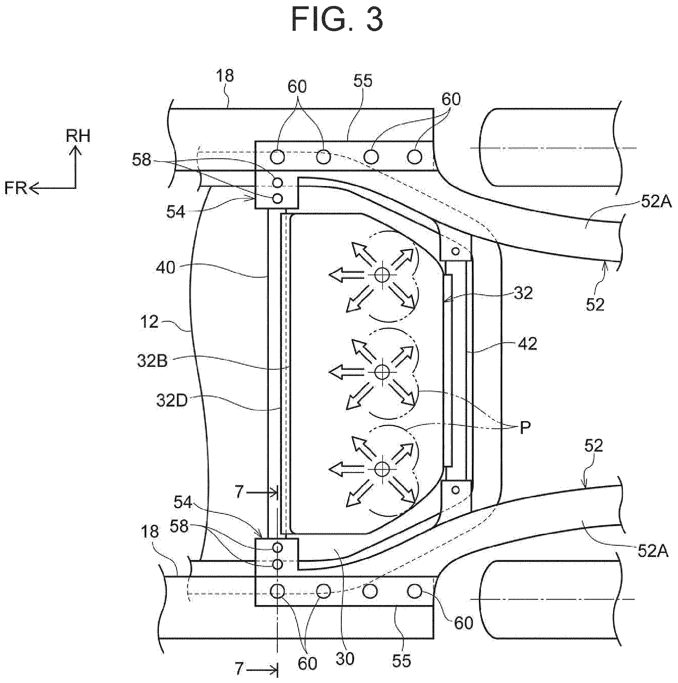

As shown in FIG. 3 and FIG. 5, a front portion of each side member 52 is fixed on the rocker 18. Specifically, at the front portion of the side member 52, a fixing piece 55 extending toward the outer side in the vehicle width direction is formed, and the fixing piece 55 is fastened with bolts 60 in a state of being laid on the upper face of the rocker 18. In the present embodiment, while four bolts 60 are provided in the vehicle front-rear direction as one example, the arrangement and number of the bolts 60 are not particularly limited.

### Workings

Next, the workings of the vehicle lower structure according to the present embodiment will be described.

As shown in FIG. 1, in the vehicle lower structure according to the present embodiment, the battery case 12 that houses the battery is provided at a lower part of the vehicle V, and the upper face of the battery case 12 constitutes the vehicle cabin floor. Thus, the need for a floor panel is eliminated, and the space inside the vehicle cabin can be expanded compared with a configuration in which a floor panel is provided.

As shown in FIG. 2, on the vehicle upper side of the battery case 12, the auxiliary cover 32 is provided. The auxiliary cover 32 covers the auxiliaries 100 that are protection targets from the outer side, and supports the seat cushion 35 of the vehicle seat VS from the vehicle lower side.

Here, as shown in FIG. 4, on the vehicle front side of the auxiliary cover 32, the front-side reinforcing cross-member 40 is provided. The front-side reinforcing cross-member 40 extends in the vehicle width direction, and the upper face 40A of the front-side reinforcing cross-member 40 constitutes the support part that supports the auxiliary cover 32 from the lower side. Thus, as shown in FIG. 2, in the event of a frontal collision of the vehicle V, even when an excessive load is input from an occupant P seated on the vehicle seat VS into the auxiliary cover 32 in the direction indicated by the arrow in the drawing, as the collision load is transmitted in the vehicle width direction through the front-side reinforcing cross-member 40, input of the collision load into the auxiliaries 100 can be inhibited.

Specifically, in the event of a frontal collision of the vehicle V, a load is input from the ischium (buttocks) of the occupant P into the seat cushion 35 toward the vehicle front side as well as the vehicle lower side due to inertial movement of the occupant P. The load input from the occupant P is transmitted from the seat cushion 35 to the auxiliary cover 32. Here, if the front-side reinforcing cross-member 40 and the rear-side reinforcing cross-member 42 are not provided, the auxiliary cover 32 may break and the load may be input into the auxiliaries 100.

In the present embodiment, since the front-side reinforcing cross-member 40 is provided, the load is transmitted from the auxiliary cover 32 to the front-side reinforcing cross-member 40, so that the load is distributed toward both sides in the vehicle width direction through the front-side reinforcing cross-member 40. Thus, breaking of the auxiliary cover 32 and the resulting input of the load into the auxiliaries 100 can be inhibited. That is, in the structure in which the upper face of the battery case 12 is made to function as a floor panel, input of a load into an object housed under the vehicle seat VS can be inhibited in the event of a frontal collision of the vehicle V.

In the present embodiment, the auxiliary cover 32 is configured to include the upper wall part 32A, the front wall part 32B, and the rear wall part 32C, and the seat cushion 35 is supported by the upper wall part 32A. Since the front-side reinforcing cross-member 40 is disposed at a position overlapping the front wall part 32B as seen in a plan view, a load can be effectively transmitted from the front wall part 32B to the front-side reinforcing cross-member 40.

Further, in the present embodiment, since the auxiliary cover 32 is inclined toward the vehicle lower side in the direction from the vehicle front side toward the vehicle rear side as seen in a vehicle side view, in the event of a frontal collision, a load is likely to be input from the buttocks of the occupant P into the auxiliary cover 32 toward the front side as well as the lower side, so that the load can be efficiently transmitted to the front-side reinforcing cross-member 40. In addition, a reaction force toward the vehicle rear side as well as the vehicle upper side acts on the buttocks of the occupant P from the auxiliary cover 32, which can inhibit inertial movement of the occupant P toward the vehicle front side.

Moreover, in the present embodiment, since the auxiliary cover 32 is formed as a separate body from the battery case 12, the auxiliary cover 32 can be assembled as a module on the side of the vehicle seat VS. Maintenance of the auxiliaries 100 can be performed by simply removing the auxiliary cover 32.

As shown in FIG. 3, in the present embodiment, since both end portions in the vehicle width direction of the front-side reinforcing cross-member 40 are connected to the side members 52, a load input into the front-side reinforcing cross-member 40 through the auxiliary cover 32 is transmitted to the pair of left and right side members 52. Thus, input of the load into the battery case 12 can be inhibited. As there is no need to fix the front-side reinforcing cross-member 40 to the battery case 12, the vehicle seat VS of the rear seat and the battery case 12 can be easily separated from each other.

In particular, in the present embodiment, as shown in FIG. 4, the side members 52 are each configured to include the main body part 53 and the front-side protruding part 54. Thus, compared with a configuration in which the front-side reinforcing cross-member 40 is fixed by being placed against the side members 52, stress concentration at junctions between the front-side reinforcing cross-member 40 and the side members 52 can be inhibited, so that a load can be effectively transmitted from the front-side reinforcing cross-member 40 to the side members 52.

Further, the front-side protruding part 54 of the present embodiment has an inverted U-shape that is open on the vehicle lower side as seen in a vehicle side view. Thus, three faces, the upper face 40A, the front face, and the rear face, of the front-side reinforcing cross-member 40 are covered by the front-side protruding part 54. As a result, the front-side reinforcing cross-member 40 can be fastened to the front-side protruding part 54 at any one of the upper face 40A, the front face, and the rear face, which improves the ease of assembly.

Moreover, in the present embodiment, the rear-side reinforcing cross-member 42 is provided on the vehicle rear side of the auxiliary cover 32, and the rear-side reinforcing cross-member 42 extends in the vehicle width direction. Thus, a load acting on the front side of the auxiliary cover 32 can be borne by the front-side reinforcing cross-member 40, and a load acting on the rear side of the auxiliary cover 32 can be borne by the rear-side reinforcing cross-member 42. As a result, breaking of a rear part of the auxiliary cover 32 can be inhibited even when an excessive load acts thereon. Further, as shown in FIG. 3, when the rear seat is a bench seat for three, loads are input in various directions from the buttocks of three seated occupants during travel of the vehicle V. In this case, the loads can be efficiently transmitted to the framework members by adopting the configuration in which the front-side reinforcing cross-member 40 and the rear-side reinforcing cross-member 42 are connected to the side members 52 as in the present embodiment.

In the present embodiment, as shown in FIG. 4, each side member 52 is configured to include the rear-side protruding part 56. Thus, compared with a configuration in which the rear-side reinforcing cross-member 42 is fixed by being placed against the side members 52, stress concentration at junctions between the rear-side reinforcing cross-member 42 and the side members 52 can be inhibited, so that a load can be effectively transmitted from the rear-side reinforcing cross-member 42 to the side members 52.

In particular, like the front-side protruding part 54, the rear-side protruding part 56 of the present embodiment has an inverted U-shape that is open on the vehicle lower side as seen in a vehicle side view. Thus, three faces, the upper face 42A, the front face, and the rear face, of the rear-side reinforcing cross-member 42 are covered by the rear-side protruding part 56. As a result, the ease of assembly improves.

Further, in the present embodiment, as shown in FIG. 1, FIG. 3, FIG. 5, and so on, the front portion of each side member 52 is fixed on the rocker 18, so that in the event of a frontal collision, a load input into the side member 52 through the front-side reinforcing cross-member 40 is transmitted toward the vehicle front side through the rocker 18. Thus, the collision load can be more effectively distributed.

Moreover, in the present embodiment, the pair of left and right side members 52 is integrally provided by casting. Thus, a load input into the left or right side member 52 can be borne by the high-strength member that is integrally provided by casting.

In the present embodiment, as shown in FIG. 7, the front-side reinforcing cross-member 40 includes the partition part 41 that divides the internal space into the upper and lower parts, and the rigidity can be enhanced by the partition part 41.

Further, the partition part 41 of the present embodiment is located at the same level as the upper faces of the rockers 18. That is, an imaginary line extending the partition part 41 in the vehicle width direction coincides with the upper faces of the rockers 18. Thus, by setting the partition part 41 at the same level as the upper faces of the rockers 18, in the event of a lateral collision of the vehicle V, a load can be effectively transmitted from the rocker 18 to the front-side reinforcing cross-member 40. As a result, the collision load can be smoothly transmitted toward the opposite-collision side.

### Second Embodiment

Next, a vehicle lower structure according to a second embodiment will be described with reference to the drawings. The same components as in the first embodiment will be denoted by the same reference sign and description thereof will be omitted as appropriate.

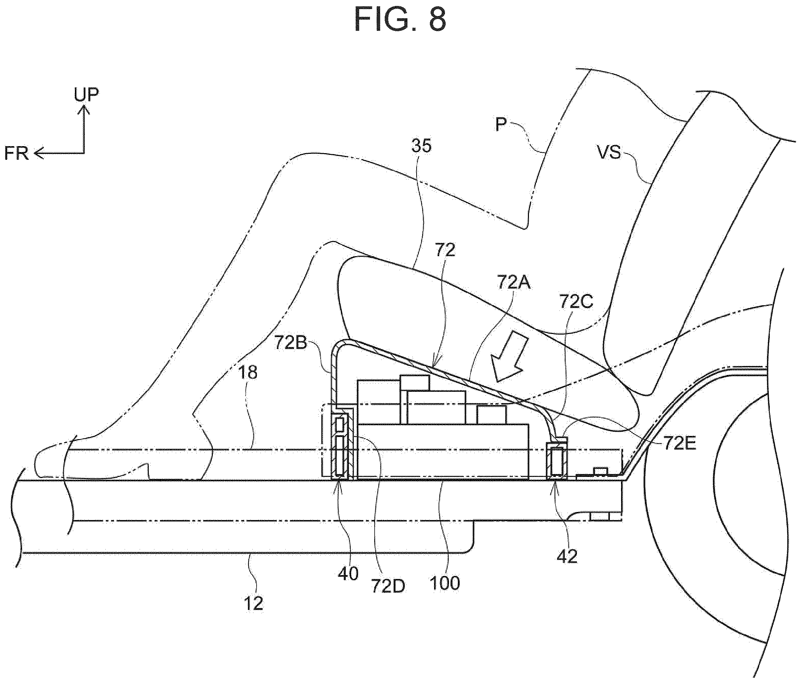

FIG. 8 is a schematic sectional side view of the vehicle lower structure according to the second embodiment. As shown in FIG. 8, the present embodiment differs from the first embodiment in the shape of an auxiliary cover 72, while the components other than the auxiliary cover 72 are the same as in the first embodiment.

The auxiliary cover 72 is configured to include an upper wall part 72A that supports the seat cushion 35, a front wall part 72B that extends from a front end of the upper wall part 72A toward the vehicle lower side, and a rear wall part 72C that extends from a rear end of the upper wall part 72A toward the vehicle lower side.

The upper wall part 72A is inclined toward the vehicle lower side in the direction from the vehicle front side toward the vehicle rear side as seen in a vehicle side view so as to correspond to the inclination of the seat cushion 35. The front wall part 72B extends substantially perpendicularly from the front end of the upper wall part 72A toward the vehicle lower side. The front wall part 72B is bent toward the vehicle rear side along the upper face of the front-side reinforcing cross-member 40, and includes a lower front wall part 72D that is further extended downward along the rear face of the front-side reinforcing cross-member 40. A lower end of the lower front wall part 72D is in contact with the upper face of the battery case 12.

The rear wall part 72C extends substantially perpendicularly from the rear end of the upper wall part 72A toward the vehicle lower side. A lower end portion of the rear wall part 72C is a rear flange 72E that is bent toward the vehicle rear side along the rear-side reinforcing cross-member 42.

### Workings

Next, the workings of the vehicle lower structure according to the present embodiment will be described.

In the present embodiment, the auxiliary cover 72 includes the lower front wall part 72D under the front wall part 72B, and the lower front wall part 72D extends to the battery case 12 along the rear face of the front-side reinforcing cross-member 40. Thus, in the event of a frontal collision, a load input from the occupant P into the auxiliary cover 72 can be distributed to both the front-side reinforcing cross-member 40 and the battery case 12.

In the present embodiment, a load toward the vehicle front side that acts on the auxiliary cover 72 can be borne by the rear face of the front-side reinforcing cross-member 40, so that buckling of the front wall part 72B of the auxiliary cover 72 can be inhibited. The other workings are the same as in the first embodiment.

### Third Embodiment

Next, a vehicle lower structure according to a third embodiment will be described with reference to the drawings. The same components as in the first embodiment will be denoted by the same reference sign and description thereof will be omitted as appropriate.

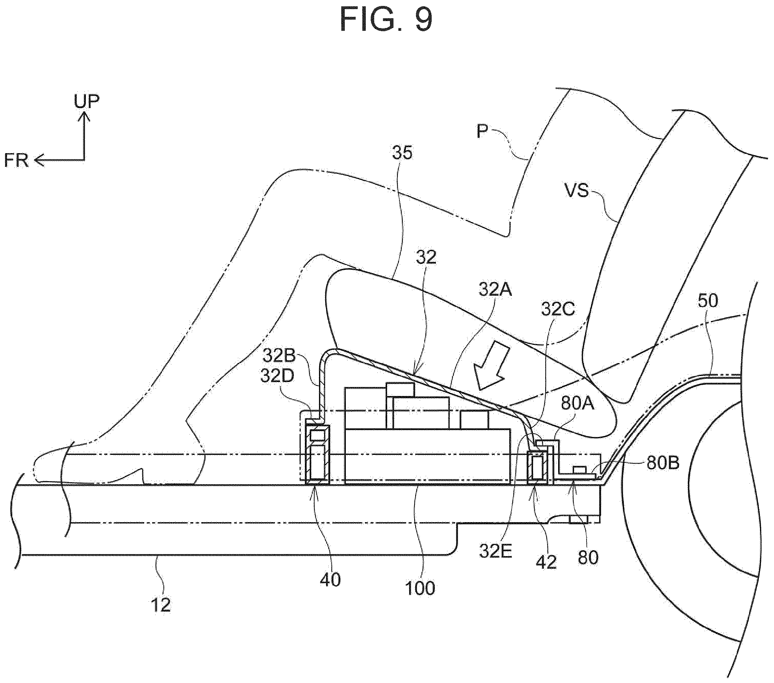

FIG. 9 is a schematic sectional side view of the vehicle lower structure according to the third embodiment. As shown in FIG. 9, in the present embodiment, the auxiliary cover 32 and the rear module 50 are coupled to each other through brackets 80.

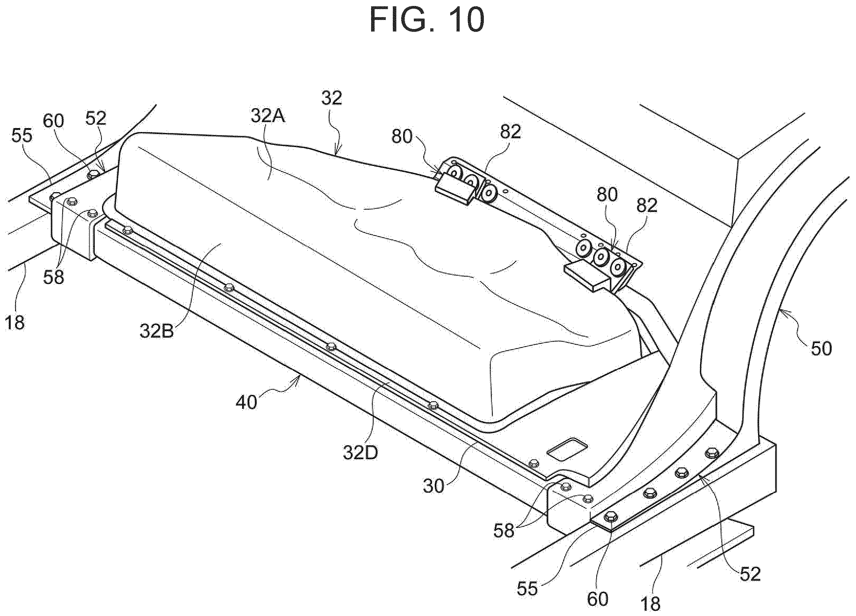

As shown in FIG. 10, in the present embodiment, the rear module 50 is provided with belt fastening parts 82 to which a webbing of a seatbelt device (not shown) is fastened. At the belt fastening parts 82, the auxiliary cover 32 is fastened on the rear module 50 by the brackets 80.

As shown in FIG. 9, each bracket 80 is formed in a substantially crank shape as seen in a vehicle side view, and a front end portion 80A of the bracket 80 extends in the vehicle front-rear direction as seen in a vehicle side view. The front end portion 80A is joined in a state of being laid on an upper face of the rear flange 32E of the auxiliary cover 32. The method of joining the bracket 80 and the rear flange 32E together is not particularly limited, and these parts may be mechanically fastened together with bolts, nuts, or the like, or may be joined together by welding or the like.

A rear end portion 80B of the bracket 80 extends in the vehicle front-rear direction as seen in a vehicle side view, and the rear end portion 80B is fastened in a state of being laid on the belt fastening part 82 of the rear module 50.

### Workings

Next, the workings of the vehicle lower structure according to the present embodiment will be described.

In the present embodiment, the auxiliary cover 32 and the rear module 50 are coupled to each other by the brackets 80, so that even when a load is input in the event of a frontal collision, the auxiliary cover 32 can be effectively inhibited from coming off.

In particular, in the present embodiment, since the brackets 80 are fastened on the belt fastening parts 82, space efficiency can be improved compared with a structure in which the brackets 80 are fastened at other places. That is, the belt fastening parts 82 need to be formed so as to have high strength in the first place to fasten the webbing. Therefore, by fastening the brackets 80 to the belt fastening parts 82, the need to separately form a high-strength part is eliminated, and space can be secured for other purposes. The other workings are the same as in the first embodiment.

### Fourth Embodiment

Next, a vehicle lower structure according to a fourth embodiment will be described with reference to the drawings. The same components as in the first embodiment will be denoted by the same reference sign and description thereof will be omitted as appropriate.

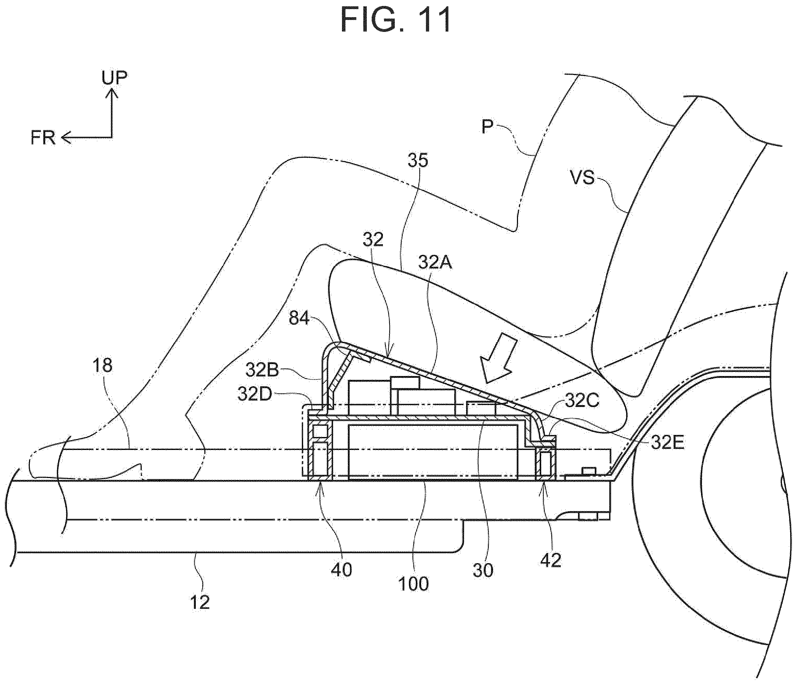

FIG. 11 is a schematic sectional side view of the vehicle lower structure according to the fourth embodiment. As shown in FIG. 11, the present embodiment is the same as the first embodiment except that a reinforcing bracket 84 is provided.

The auxiliary cover 32 is provided with the reinforcing bracket 84. The reinforcing bracket 84 is provided at a front end portion of the auxiliary cover 32 and suspended between a lower face of the upper wall part 32A and a rear face of the front wall part 32B.

Here, the reinforcing bracket 84 extends in a direction substantially orthogonal to the upper wall part 32A of the auxiliary cover 32. In other words, the reinforcing bracket 84 is extended along a direction of a load input from the occupant P into the auxiliary cover 32 in the event of a frontal collision (the direction of the arrow in the drawing).

### Workings

Next, the workings of the vehicle lower structure according to the present embodiment will be described.

In the present embodiment, the reinforcing bracket 84 can effectively inhibit deformation of the auxiliary cover 32. In addition, in the event of a frontal collision, the reinforcing bracket 84 can effectively transmit a load input from the occupant P to the front-side reinforcing cross-member 40. The other workings are the same as in the first embodiment.

While the vehicle lower structures according to the present disclosure have been described above, it goes without saying that the present disclosure can be implemented in various aspects within such a range that no departure is made from the gist of the disclosure. For example, the vehicle lower structures of the first embodiment to the fourth embodiment may be combined with one another.

In the above-described embodiment, as shown in FIG. 2, the front flange 32D of the auxiliary cover 32 extends toward the vehicle front side. However, the front flange 32D is not limited thereto, and a structure in which the front flange 32D extends toward the vehicle rear side along the upper face of the front-side reinforcing cross-member 40 may be adopted. Similarly, the rear flange 32E of the auxiliary cover 32 may extend toward the vehicle front side along the upper face of the rear-side reinforcing cross-member 42.

Further, in the above-described embodiments, the front wall part 32B of the auxiliary cover 32 extends substantially perpendicularly from the front end of the upper wall part 32A, but the front wall part 32B is not limited thereto. For example, the front wall part may be configured to extend from the upper wall part 32A obliquely toward the vehicle front side as well as the vehicle lower side.

Moreover, in the embodiments, the structure in which the front-side reinforcing cross-member 40 and the rear-side reinforcing cross-member 42 are not fastened on the battery case 12 is adopted, but these members are not limited thereto. For example, the front-side reinforcing cross-member 40 and the rear-side reinforcing cross-member 42 may be fastened on the upper face of the battery case 12.

In the embodiments, as shown in FIG. 4, the front-side protruding part 54 and the rear-side protruding part 56 have an inverted U-shape that is open on the vehicle lower side as seen in a vehicle side view, but are not limited to this shape and may have other shapes.

Further, the cross-sectional shapes of the front-side reinforcing cross-member 40, the rear-side reinforcing cross-member 42, and the rockers 18 are not limited to those in the structure of the above-described embodiments and may be other shapes.

Moreover, in the above-described embodiments, the auxiliary cover 32 that covers the auxiliaries 100 as protection targets has been described. However, the cover is not limited to this cover. For example, the cover may be one that covers a battery cell as a protection target. In this case, the cover may be formed as a separate body from the battery case 12 constituting the vehicle cabin floor and may be provided above the battery case 12.

Regarding the above-described embodiments, the following supplements will be disclosed.

### (Supplement 1)

A vehicle lower structure having:
a battery case that is provided at a lower part of a vehicle and houses a battery, and of which an upper face constitutes a vehicle cabin floor;
a cover that is provided on a vehicle upper side of the battery case, and supports a seat cushion of a vehicle seat from a vehicle lower side and covers a protection target from an outer side; and
a front-side reinforcing cross-member that covers the protection target provided on a vehicle front side of the cover and extends in a vehicle width direction, and in which a support part that supports the cover from the lower side is provided at an upper end portion.

### (Supplement 2)

The vehicle lower structure according to Supplement 1, wherein:
the cover is configured to include an upper wall part that supports the seat cushion and a front wall part that extends from a front end of the upper wall part toward the vehicle lower side; and
the front-side reinforcing cross-member is disposed at a position overlapping the front wall part as seen in a plan view.

### (Supplement 3)

The vehicle lower structure according to Supplement 2, wherein the upper wall part of the cover is inclined toward the vehicle lower side in a direction from a vehicle front side toward a vehicle rear side as seen in a vehicle side view.

### (Supplement 4)

The vehicle lower structure according to any one of Supplement 1 to Supplement 3, wherein both end portions in the vehicle width direction of the front-side reinforcing cross-member are connected to a pair of left and right side members that extends in a vehicle front-rear direction.

### (Supplement 5)

The vehicle lower structure according to Supplement 4, wherein the pair of left and right side members each includes a main body part that extends in the vehicle front-rear direction, and a front-side protruding part that is protruded from the main body part toward an inner side in the vehicle width direction and to which the front-side reinforcing cross-member is connected.

### (Supplement 6)

The vehicle lower structure according to Supplement 5, wherein the front-side protruding part has an inverted U-shape that is open on the vehicle lower side as seen in a vehicle side view so as to cover an upper face, a front face, and a rear face of the front-side reinforcing cross-member.

### (Supplement 7)

The vehicle lower structure according to any one of Supplements 4 to 6, having a rear-side reinforcing cross-member that is provided on the vehicle rear side of the cover and extends in the vehicle width direction, and in which a support part that supports the cover from the lower side is provided at an upper end portion.

### (Supplement 8)

The vehicle lower structure according to Supplement 7, wherein:
the pair of left and right side members is each configured to include a rear-side protruding part that is protruded from the main body part toward the inner side in the vehicle width direction and to which the rear-side reinforcing cross-member is connected; and
the rear-side reinforcing cross-member is connected to the side member at the rear-side protruding part.

### (Supplement 9)

The vehicle lower structure according to Supplement 8, wherein the rear-side protruding part has an inverted U-shape that is open on the vehicle lower side as seen in a vehicle side view so as to cover an upper face, a front face, and a rear face of the rear-side reinforcing cross-member.

### (Supplement 10)

The vehicle lower structure according to any one of Supplement 4 to Supplement 8, including a pair of left and right rockers that extends in the vehicle front-rear direction on both sides in the vehicle width direction, wherein front portions of the side members are fixed on the rockers.

### (Supplement 11)

The vehicle lower structure according to any one of Supplement 4 to Supplement 9, wherein the pair of left and right side members is integrally provided by casting.

### (Supplement 12)

The vehicle lower structure according to any one of Supplement 1 to Supplement 11, wherein the cover is provided as a separate body from the battery case and covers auxiliaries that are protection targets.

### (Supplement 13)

The vehicle lower structure according to Supplement 10, wherein:
the front-side reinforcing cross-member has a closed cross-sectional shape and includes a partition part that divides an internal space into upper and lower parts; and
the partition part is located at the same level as upper faces of the rockers.

### (Supplement 14)

A vehicle lower structure having:
a battery case that is provided at a lower part of a vehicle and houses a battery;
a cover that is provided on a vehicle upper side of the battery case, and supports a seat cushion of a vehicle seat from a vehicle lower side and covers a protection target from an outer side; and
a front-side reinforcing cross-member that is provided on a vehicle front side of the cover and extends in a vehicle width direction, and in which a support part that supports the cover from the lower side is provided at an upper end portion.

## Claims

1. A vehicle lower structure comprising:
a battery case (12) that is provided at a lower part of a vehicle and houses a battery, and of which an upper face constitutes a vehicle cabin floor;
a cover (32) that covers a protection target provided on a vehicle upper side of the battery case and supports a seat cushion (35) of a vehicle seat (VS) from a vehicle lower side; and
a front-side reinforcing cross-member (40) that is provided on a vehicle front side of the cover (32) and extends in a vehicle width direction, and in which a support part (40A) that supports the cover from the lower side is provided at an upper end portion.

2. The vehicle lower structure according to claim 1, wherein the cover (32) includes an upper wall part (32A) that supports the seat cushion (35) and a front wall part (32B) that extends from a front end of the upper wall part (32A) toward the vehicle lower side, and the front-side reinforcing cross-member (40) is disposed at a position overlapping the front wall part (32B) as seen in a plan view.

3. The vehicle lower structure according to claim 2, wherein the upper wall part (32A) of the cover is inclined toward the vehicle lower side in a direction from the vehicle front side toward a vehicle rear side as seen in a vehicle side view.

4. The vehicle lower structure according to any one of claims 1 to 3, wherein both end portions in the vehicle width direction of the front-side reinforcing cross-member (40) are connected to a pair of left and right side members (52) that extends in a vehicle front-rear direction.

5. The vehicle lower structure according to claim 4, wherein the pair of the left and right side members (52) each includes a main body part (53) that extends in the vehicle front-rear direction, and a front-side protruding part (54) that is protruded from the main body part (53) toward an inner side in the vehicle width direction and to which the front-side reinforcing cross-member (40) is connected.

6. The vehicle lower structure according to claim 5, wherein the front-side protruding part (54) has an inverted U-shape that is open on the vehicle lower side as seen in a vehicle side view so as to cover an upper face, a front face, and a rear face of the front-side reinforcing cross-member (40).

7. The vehicle lower structure according to claim 5 or 6, further comprising a rear-side reinforcing cross-member (42) that is provided on a vehicle rear side of the cover (32) and extends in the vehicle width direction, and in which a support part that supports the cover (32) from the lower side is provided at an upper end portion.

8. The vehicle lower structure according to claim 7, wherein the pair of the left and right side members (52) each includes a rear-side protruding part (56) that is protruded from the main body part (53) toward the inner side in the vehicle width direction and to which the rear-side reinforcing cross-member (42) is connected, and the rear-side reinforcing cross-member (42) is connected to the side member (52) at the rear-side protruding part (56).

9. The vehicle lower structure according to claim 8, wherein the rear-side protruding part (56) has an inverted U-shape that is open on the vehicle lower side as seen in a vehicle side view so as to cover an upper face, a front face, and a rear face of the rear-side reinforcing cross-member (42).

10. The vehicle lower structure according to claim 4 taken in combination with any one of claims 1 to 9, further comprising a pair of left and right rockers (18) that extends in the vehicle front-rear direction on both sides in the vehicle width direction, wherein front portions of the side members (52) are fixed on the rockers (18).

11. The vehicle lower structure according to claim 4 taken in combination with any one of claims 1 to 10, wherein the pair of the left and right side members (52) is integrally provided by casting.

12. The vehicle lower structure according to any one of claims 1 to 11, wherein the cover (32) is provided as a separate body from the battery case (12) and covers auxiliaries that are the protection targets.

13. The vehicle lower structure according to claim 10, wherein the front-side reinforcing cross-member (40) has a closed cross-sectional shape and includes a partition part (41) that divides an internal space into upper and lower parts, and the partition part (41) is located at the same level as upper faces of the rockers (18).
